# EUROPEAN PATENT SPECIFICATION

(11) **EP 4 388 732 B1**
(45) Date of publication and mention of the grant of the patent: **18.03.2026**
(21) Application number: 21763098.7
(22) Date of filing: 20.08.2021
(51) Int. Cl.: H04M 3/56, H04M 1/60

(54) **VEHICLE CONFIGURED TO PERFORM A VOICE CALL VIA A COMMUNICATION DEVICE AND METHOD**
FAHRZEUG MIT KONFIGURATION ZUR DURCHFÜHRUNG EINES SPRACHANRUFS ÜBER EINE KOMMUNIKATIONSVORRICHTUNG UND VERFAHREN
VÉHICULE CONFIGURÉ POUR METTRE EN OEUVRE UN APPEL VOCAL PAR L'INTERMÉDIAIRE D'UN DISPOSITIF DE COMMUNICATION ET PROCÉDÉ

(43) Date of publication of application: 26.06.2024
(73) Proprietor: CARIAD SE, 38440 Wolfsburg (DE)
(72) Inventor: NAFFATI, Malek, 85114 Buxheim (DE)
(74) Representative: Hofstetter, Schurack & Partner
(86) International application number: PCT/EP2021/073158
(87) International publication number: WO 2023/020703

(56) References cited:
- US-A1- 2020 043 486
- US-A1- 2020 258 518

## Description

The invention is concerned with a vehicle configured to perform a voice call via a communication device and a method for operating a vehicle for performing a predefined voice call via a communication device.

Due to the increasing number of telephone conferences, there is also an increase in the number of telephone conferences that are held from a vehicle. Modern conference programs allow a conference between more than two participants. A common problem in these conferences is a disturbance of the perspicuity of a speaker caused by background noise recorded by a device of a listener. Background noise can originate from the environment of a conference partner or may be caused by echoes in a device of a participant of the conference. Especially in vehicles, a background noise level is present that is higher than average noise levels in offices or conference rooms. The background noise in vehicles originates from a motor or traffic. In order to reduce a disturbance of the conference partners with background noise of the vehicle, it is common to use filter algorithms that raise a filter level when a high level of background noise is detected in the vehicle. Therefore, no or only little background noise is transmitted to the other conference partners. A drawback of the use of filters is the fact that also voice signals of the participant in the vehicle may be filtered out. Another option is a deactivation of a microphone in the vehicle when no voice of the participant has to be recorded. A drawback of a simple deactivation of a microphone is the fact that communication modules transmitting signals to other users of the microphone continue the transmission of record signals even when the microphone is offline. Therefore, no reduce of a data stream of the vehicle is performed. Other users may not recognize whether the microphone of the participant in the vehicle is on or off.

US 2016/0014250 A1 describes a mobile or in-vehicle communication system and a method facilitate communication among groups. The system comprises a do-not-disturb functionality. The do-not-disturb functionality allows a silencing of a control unit of the vehicle. During the do-not-disturb functionality, the control unit will intelligently handle incoming email, email forwarding, providing automatic email replies, and processing email as desired. A mute feature is also available. This feature allows an automatically rejection of communication attempts from neighboring control units, such that no chatting is initiated in the do-not-disturb mode.

US 2020/0258518 A1 describes a privacy device for smart speakers. The privacy blocking device is configured to prevent receipt by a listening device of video and/or audio data until a trigger occurs. A blocker may be configured to prevent receipt of video and/or audio data by one or more microphones and/or one or more cameras of a listening device. The blocker may use one or more microphones, one or more cameras, and/or one or more second microphones and/or one or more second cameras to monitor for a trigger. The blocker may process the data. Upon detecting the trigger, the blocker may transmit data to the listening device.

US 2020/0043486 A1 discloses a method that enables a device to detect and initiate processing of a spoken command spoken during a communication session while a sound sensor is muted with respect to the communication session.

It is an object of the invention to provide a manual deactivation of a transmission of record signals to conference partners.

The objective is accomplished by the subject matter of the independent claims. Advantageous developments with convenient and non-trivial further embodiments of the invention are specified in the following description, the dependent claims and the figures.

The present invention is defined by the independent claims. Advantageous embodiments are described in the dependent claims, the following description and the drawings. The invention comprises a vehicle configured to perform a voice call via a communication device. The voice call may be performed using a wireless telephone network. The communication device may be designed as a module for the vehicle or as a handheld situated in the vehicle that is configured to conduct the voice call with conference partners outside the vehicle. The vehicle comprises a recording device, configured to record sound and/or images in a passenger cabin of the vehicle and to generate respective record signals or recorded signals during the voice call. In other words, the vehicle comprises the recording device which is configured to generate the record signals during the voice call. The recording device may comprise a microphone and/or a camera to record the sound and/or the images in the passenger cabin of the vehicle. The recording device may be configured to provide the generated record signals to a network of the vehicle. The vehicle comprises a control device configured to transmit the record signals to the communication device during the voice call. In other words, the control device of the vehicle is configured to forward the record signals to the communication device. The communication device provides the record signals to other participants of the voice call during the voice call. The communication device may provide the record signals to the conference partners via a mobile internet connection.

The control device is configured upon reception of a predefined mute signal, to control the communication device, to activate a predefined mute mode of the voice call in the communication device. In other words, the communication device is configured to be used in the predefined mute mode of the voice call. The control device is configured to activate the predefined mute mode of the voice call when the control device receives the predefined mute signal. The communication device is configured to receive the record signals during the predefined voice call and to discard the record signals, when the predefined mute mode of the voice call is activated in the communication device. The communication device is configured to transmit the record signals to a conversation partner of the voice call outside the vehicle when the predefined mute mode of the voice call is not activated. In other words, the communication device is configured to send the record signals to the conversation partner of the voice call when the mute mode is not active. When the mute mode of the voice call is active, the record signals are not transmitted to conference partners. The invention has the advantage that a transmission of record signals to conversation partners is paused when the mute mode of the voice call is activated. In contrast to common methods that provide empty record signals when the microphone is deactivated, the mute mode allows a reduction of a data stream, when the mute mode is active.

Besides, the communication device is configured to send a mute status signal, indicating a status of the mute mode to the conversation partner of the voice call outside the vehicle. In other words, the communication device is configured to indicate the status of the mute mode to the conversation partner by sending a mute status signal to the conversation partner. The communication device may be configured to send a predefined mute message to the conversation partner outside the vehicle upon activation of the mute mode and/or to send a predefined mute end message to the conversation partner outside the vehicle upon deactivation of the predefined mute mode. The mute status signal may be sent upon activation or deactivation of the mute status. The mute signal may also be sent regularly to the conversation partner as a keep alive signal during the mute mode.

The invention provides further embodiments that provide additional advantages.

According to a further embodiment of the invention, the communication device is configured to end or to reduce a data stream to the conversation partner of the voice call outside the vehicle when the predefined mute mode of the voice call is activated. In other words, the communication device is configured to reduce or to end a transmission of the record data to the conversation partner of the voice call when the mute mode of the voice call is activated. The embodiment has the advantage that data transmission to the conversation partner is reduced in the mute mode. The reduction or end of the data stream coming from the conversation partner may be received without a limitation in the predefined mute mode.

According to a further embodiment of the invention, the control device is configured upon reception of a predefined unmute signal, to control the communication device, to deactivate the mute mode of the voice call in the communication device. In other words, the control device is configured to end the mute mode of the communication device when the control device receives the predefined unmute signal.

According to a further embodiment of the invention, the vehicle comprises an input device, configured to detect a predefined first user input. The Input device may be designed as a user interface comprising user input elements like buttons and/or switches to detect the predefined first user input. The input device is configured to send the predefined mute signal to the control device upon detection of the predefined first user input. In other words, the input device is configured to generate the predefined mute signal when the first user input is detected by the input device and to send the predefined mute signal to the control device. In addition or as an alternative the input device is configured to detect a predefined second user input, and to send the predefined unmute signal to the control device upon detection of the predefined second user input.

According to a further embodiment of the invention the input device comprises a steering wheel input element, situated on a steering wheel of the vehicle configured to detect the predefined first user input and/or the predefined second user input. In other words, the input device of the vehicle comprises the steering wheel input element on the steering wheel of the vehicle. The steering wheel input element is configured to detect the predefined first user input and/or the predefined second user input. The steering wheel input element may be configured as a button or a switch on the steering wheel.

According to a further embodiment of the invention, the input device comprises a vehicle console input element, situated on a vehicle console of the vehicle configured to detect the predefined first user input and/or the predefined second user input. In other words, the center console of the vehicle or another console of the vehicle comprises the vehicle console input element. The vehicle console input element is configured to detect the predefined first user input and/or the predefined second user input. The console input element may be configured as a button or an area of a touch screen on a vehicle console.

According to a further embodiment of the invention, the control device is configured to control the communication device via Bluetooth. In other words, the control device is configured to activate or to deactivate the mute mode of the communication device via a Bluetooth connection. The connection may use a AVRCP (Audio Video Remote Control Profile), wherein the control device is designated as an AVRCP-CT (Audio Video Remote Control Profile Controller) and the communication device is designated as an AVRCP-TG (Audio Video Remote Control Profile Target). The control device may control the communication device according to AVRCP-standard in order to activate and/or deactivate the mute mode.

According to a further embodiment of the invention, the communication device is designed as an internal communication device installed in the vehicle. In other words, the communication device is a module installed in the vehicle. As an example, the communication device may be a device of an infotainment device of the vehicle.

According to a further embodiment of the invention, the communication device is designed as an external communication device, that is removably arranged in a predefined holder of the vehicle or loosely situated in the passenger cabin of the vehicle. In other words, the communication device is removable from the vehicle. The communication device may be designed as a smartphone that may be arranged in the predefined holder of the vehicle. The communication device may be connected to the vehicle via cable or a wireless network in order to receive the record signals during the voice call.

The invention comprises a method for operating a vehicle for performing a predefined voice call via a communication device. In the method a recording device of the vehicle records sound and/or images in a passenger cabin of the vehicle and generates respective recording signals during the predefined voice call. In other words, the recording device generates record signals describing sound and/or images recorded by the recording device during the voice call. In a next step, a control device of the vehicle transmits the recording signals to the communication device during the predefined voice call. In other words, the control device receives the record signals of the recording device and forwards the record signals to the communication device. When the control device receives a predefined mute signal, the control device controls the communication device to activate a predefined mute mode of the voice call in the communication device. In other words, upon reception of the predefined mute signal, the control device activates the predefined mute mode of the voice call in the communication device. The activation may be performed by a control signal sent to the communication device by the control device. The communication device receives the recording signals during the predefined voice call and discards the recording signals, when the predefined mute mode of the voice call is activated in the communication device, and transmits the recording signals to a conversation partner of the predefined voice call outside the vehicle when the predefined mute mode of the voice call is not activated. In other words, the communication device receives the record signals of the recording device and forwards the record signals to the conversation partner when the mute mode is not active. In case the mute mode is activated, the communication device receives record signals but does not forward the record signals to the conversation partner. Furthermore, the communication device is configured to send a mute status signal, indicating a status of the mute mode to the conversation partner of the voice call outside the vehicle.

The invention also comprises embodiments that provide features which afford additional technical advantages.

The invention also comprises embodiments of the inventive method that comprise features that correspond to features as they have already been described in connection with the embodiments of the inventive vehicle. For this reason, the corresponding features of the embodiments of the inventive method are not described here again.

The control device may comprise a data processing device or a processor circuit adapted to perform an embodiment of the method according to the invention. For this purpose, the processor circuit may comprise at least one microprocessor and/or at least one microcontroller and/or at least one FPGA (field programmable gate array) and/or at least one DSP (digital signal processor). Furthermore, the processor circuit may comprise program code which comprises computer-readable instructions to perform the embodiment of the method according to the invention when executed by the processor device. The program code may be stored in a data memory of the processor device.

The inventive vehicle is preferably designed as a motor vehicle, in particular as a passenger vehicle or a truck, or as a bus or a motorcycle.

The invention also comprises the combinations of the features of the different embodiments.

In the following an exemplary implementation of the invention is described. The figures show:
- Fig. 1: a schematic illustration of an embodiment of the inventive motor vehicle; and
- Fig. 2: a schematic illustration of a driving situation.

In the figures identical reference signs indicate elements that provide the same function.

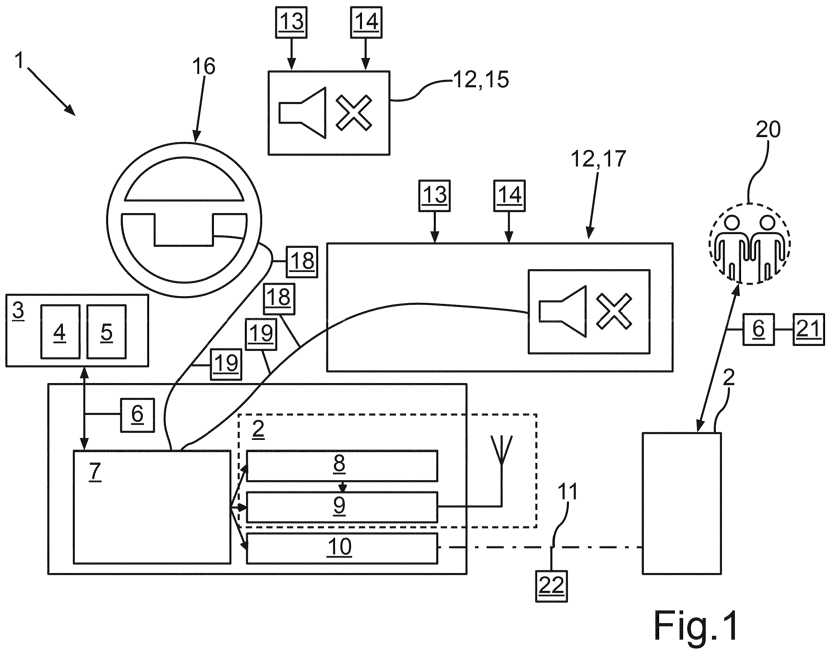

Fig. 1 shows a schematic illustration of a vehicle 1. The vehicle 1 may be a car or a truck. The vehicle 1 comprises a communication device 2 to allow a passenger in a passenger cabin of the vehicle 1 to conduct a voice call. The communication device 2 may be a module of the vehicle 1 or an external device like a smartphone or a smartwatch. The communication device 2 may be configured to perform the conference by means of voice over IP. In order to record sound and/or images in the passenger cabin of the vehicle 1 during the voice call, the vehicle 1 comprises a recording device 3. The recording device 3 may comprise one or more microphones 4 or one or more cameras 5. The recording device 3 is configured to record images and/or sounds and to generate respective record signals 6. The recording device 3 is configured to transmit the record signals 6 to a control device 7 of the vehicle 1. The control device 7 may comprise a microprocessor or a microcontroller. The transmission of the record signals 6 may be performed via an internal bus system of the vehicle 1. The control device 7 is configured to receive the record signals 6 of the recording device 3 and to forward the record signals 6 to the communication device 2 conducting the voice call. The control device 7 is configured to send the record signals 6 to the respective communication device 2 using the internal bus system of the vehicle 1. The control device 7 may send the record signals 6 to an internal communication device 2 of the vehicle 1 which my comprise a conference suite 8 configured to run a predefined software for the voice call and a transmission device 9 configured to send the record signals 6 to an external partner of the conference. If the communication device 2 is designed as an external communication device, the control device 7 may transmit the record signals 6 to the communication device 2 by means of a connector configured to establish a Bluetooth connection 11 or another connection to the communication device 2. During the voice call, it may be necessary for the user to pause or mute voice call. This may be necessary when the user listens to a speaker of the voice call and does not want to send record signals 6 to the partners of the conference during that time. Common method to mute a voice call comprise a muting of the microphone 5. This has the disadvantage that the communication device 2 may still send record signals 6 which may be empty to the conference partners. Therefore, the communication device 2 may not limit a data stream to the conference partners. Another drawback is that other partners of the conference may not recognize if the microphone 5 is muted. To provide a possibility to enable a mute mode of the communication device 2, the vehicle 1 may comprise an input device 12. The input device 12 may be configured to detect a first user input 13 and/or a second user input 14. The input device 12 may comprise an input element 15 on a steering wheel 16 of the vehicle 1. The input element 15 may be designed as a switch or button. The input device 12 may comprise other input elements, for example, a console input element 17 which may be situated on a center console of the vehicle 1. This input element 15 may be designed as a button or a touch screen. The input device 12 is configured to generate a mute signal 18 upon detection of the first user input 13 and to send the mute signal 18 to the control device 7 of the vehicle 1. Upon reception of the mute signal 18, the control device 7 may control the communication device 2 to enable a predefined mute mode of the communication device 2. Upon detection of the second user input 14, the input device 12 may generate an unmute signal 19 and send the signal to the control device 7. The control device 7 controls the communication device 2 in order to deactivate the predefined mute mode of the communication device 2. In order to inform the conference partners 20 in the predefined voice call, the communication device 2 may send predefined keep-alive signals or status signals 21 to the conference partners to signal an active mute mode of the communication device 2. The communication device 2 may be configured to reduce a data stream to the conference partners 20 as long as the mute mode is active.

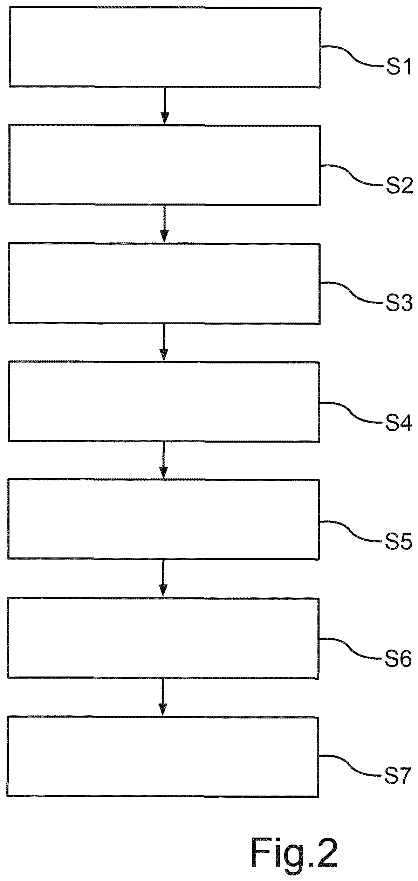

Fig. 2 shows a schematic illustration of a method for operating a vehicle. In a first step S1, the microphone 4 and/or the camera 5 of the recording device 3 of the vehicle 1 may record sound and/or images in the passenger cabin of the vehicle 1. The recording device 3 may generate respective record signals 6 and send the record signals 6 to a control device 7.

In a step S2, the control device 7 receives the record signals 6 and transmits the record signals 6 to a communication device 2 which conducts a voice call with conference partners 20. When the communication device 2 is installed in the vehicle 1, the control device 7 may send the record signals 6 to the communication device 2 using an internal bus system of the vehicle 1. If the communication device 2 is smartphone, the control device 7 may transmit the sound signals 6 to a connector 10. The connector 10 may send the sound signals 6 to the communication device 2 by means of a wireless connection 11 or a USB connection. The communication device 2 may receive the record signals 6 and send the record signals 6 to the communication partners 20 using a mobile telephone network.

In a step S3, a passenger may interact with one of the input elements 15, 17 of the input device 12. The input device 12 may recognize the first user input 13 and generates a predefined mute signal 18 which is sent to the control device 7 by the input device 12 over the internal bus system of the vehicle 1.

In a step S4, the control device 7 receives the mute signal 18 and controls the communication device 2 to activate a predefined mute mode of the communication device 2. In the predefined mute mode of the communication device 2, the communication device 2 may reduce a data limit of a data stream to the communication partners 20. The communication device 2 sends a predefined mute signal 21 to the communication partners. The communication devices of the communication partners 20 signal that the communication device 2 is in the predefined mute mode. During the predefined mute mode, the transmission between the communication device 2 and the partners 20 may be restricted to sound signals coming from the communication partners 20 and/or keep-alive packages exchanged between the partners 20 and the communication device 2. In a step S5, the user may want to end the predefined mute mode and interact with one of the input elements 15, 17 of the input device 12. The input device 12 may detect the second predefined interaction 14 and send predefined unmute signal 19 to the control device 7. In a step S6, the control device 7 may receive the predefined unmute signal 19 and control the communication device 2 to end the predefined mute mode. In a step S7, the communication device 2 may deactivate the predefined mute mode and send the status signal 21 to the partners 20 to indicate that the mute mode of the communication device 2 has ended. Upon deactivation of the predefined mute mode, the communication device 2 may continue sending the record signals 6 to the communication partners 20 during the voice call.

The use of a native mute mode of the respective communication device by means of the control device/communication stack may be the best solution in terms of quality. This would be better than just muting the microphone in the vehicle, as it would then not be apparent to the other parties that the participant is muted. In the mute mode, other optimizations of the communication medium can also be exploited. These can include, for example, a reduction or interruption of a data stream to the partner for the duration of the mute mode.

## Claims

1. Vehicle (1) configured to perform a voice call via a communication device (2), wherein
- the vehicle (1) comprises a recording device, configured to record sound and/or images in a passenger cabin of the vehicle (1) and to generate respective record signals (6) during the voice call,
- the vehicle (1) comprises a control device (7) configured to transmit the record signals (6) to the communication device (2) during the voice call,
- the control device (7) is configured, upon reception of a predefined mute signal (18), to control the communication device (2) to activate a predefined mute mode of the voice call in the communication device,
**characterized in that**
wherein the communication device (2) is configured to receive the record signals during the predefined voice call and to discard the record signals (6), when the predefined mute mode of the voice call is activated in the communication device (2), and to transmit the record signals to a conversation partner (20) of the voice call outside the vehicle (1) when the predefined mute mode of the voice call is not activated,
where the communication device (2) is configured to send a mute status signal (21), indicating a status of the mute mode to the conversation partner (20) of the voice call outside the vehicle (1).

2. Vehicle (1) according to claim 1, **characterized in that** the communication device (2) is configured to end or to reduce a data stream to the conversation partner (20) of the voice call outside the vehicle (1) when the predefined mute mode of the voice call is activated.

3. Vehicle (1) according to any of the preceding claims, **characterized in that** the control device (7) is configured upon reception of a predefined unmute signal (18) to control the communication device (2), to deactivate the mute mode of the voice call in the communication device (2).

4. Vehicle (1) according to claim 3, **characterized in that** the vehicle (1) comprises an input device (12), configured
to detect a predefined first user input (13), and to send the predefined mute signal (18) to the control device (7) upon detection of the predefined first user input (13) and/or
to detect a predefined second user input (14), and to send the predefined unmute signal (19) (18) to the control device (7) upon detection of the predefined second user input (14).

5. Vehicle (1) according to claim 4, **characterized in that** the input device (12), comprises a steering wheel (16) input element (15), situated on a steering wheel (16) of the vehicle (1) configured to detect the predefined first user input (13) and/or the predefined second user input (14).

6. Vehicle (1) according to claim 4 or 5, **characterized in that** the input device (12), comprises a vehicle (1) console input element (17), situated on a vehicle (1) console of the vehicle (1) configured to detect the predefined first user input (13) and/or the predefined second user input (14).

7. Vehicle (1) according to any of the claims 4 to 6, **characterized in that** the input device (12), comprises a touch screen input element, configured to detect the predefined first user input (13) and/or the predefined second user input (14).

8. Vehicle (1) according to any of the preceding claims, **characterized in that** the, control device (7) is configured to control the communication device (2) via Bluetooth.

9. Vehicle (1) according to any of the preceding claims, **characterized in that** the communication device (2) is designed as an internal communication device (2), installed in the vehicle (1).

10. Vehicle (1) according to any of the preceding claims, **characterized in that** the communication device (2) is designed as an external communication device (2), detachable arranged in a predefined holder of the vehicle (1) or loosely situated in the passenger cabin of the vehicle (1).

11. Method for operating a vehicle (1) for performing a predefined voice call via a communication device (2), wherein
- a recording device of the vehicle (1) records sound and/or images in a passenger cabin of the vehicle (1) and generates respective recording signals during the predefined voice call,
- a control device (7) of the vehicle (1) transmits the recording signals to the communication device (2) during the predefined voice call,
- the control device (7) receives a predefined mute signal (18)
**characterized in that**
- upon reception of the predefined mute signal (18) the control device (7) controls the communication device (2), to activate a predefined mute mode of the voice call in the communication device (2),
wherein the communication device (2) receives the recording signals during the predefined voice call and discards the recording signals, when the predefined mute mode of the voice call is activated in the communication device (2), and transmits the recording signals to a conversation partner (20) of the predefined voice call outside the vehicle when the predefined mute mode of the voice call is not activated,
wherein the communication device (2) is configured to send a mute status signal (21), indicating a status of the mute mode to the conversation partner (20) of the voice call outside the vehicle (1).

## Patentansprüche

1. Fahrzeug (1), das dazu konfiguriert ist, einen Sprachanruf mittels einer Kommunikationsvorrichtung (2) durchzuführen, wobei
- das Fahrzeug (1) eine Aufzeichnungsvorrichtung umfasst, die dazu konfiguriert ist, Ton und/oder Bilder in einem Fahrgastraum des Fahrzeugs (1) aufzuzeichnen und jeweilige Aufzeichnungssignale (6) während des Sprachanrufs zu erzeugen,
- das Fahrzeug (1) eine Steuervorrichtung (7) umfasst, die dazu konfiguriert ist, die Aufzeichnungssignale (6) während des Sprachanrufs an die Kommunikationsvorrichtung (2) zu übertragen,
- die Steuervorrichtung (7) dazu konfiguriert ist, bei Empfang eines vordefinierten Mute-Signals (18) die Kommunikationsvorrichtung (2) dazu zu steuern, einen vordefinierten Mute-Modus des Sprachanrufs in der Kommunikationsvorrichtung zu aktivieren,
**dadurch gekennzeichnet, dass**
wobei die Kommunikationsvorrichtung (2) dazu konfiguriert ist, die Aufzeichnungssignale während des vordefinierten Sprachanrufs zu empfangen und die Aufzeichnungssignale (6) zu verwerfen, wenn der vordefinierte Mute-Modus des Sprachanrufs in der Kommunikationsvorrichtung (2) aktiviert ist, und die Aufzeichnungssignale an einen Gesprächspartner (20) des Sprachanrufs außerhalb des Fahrzeugs (1) zu übertragen, wenn der vordefinierte Mute-Modus des Sprachanrufs nicht aktiviert ist,
wobei die Kommunikationsvorrichtung (2) dazu konfiguriert ist, ein Mute-Statussignal (21), das einen Status des Mute-Modus angibt, an den Gesprächspartner (20) des Sprachanrufs außerhalb des Fahrzeugs (1) zu senden.

2. Fahrzeug (1) nach Anspruch 1, **dadurch gekennzeichnet, dass** die Kommunikationsvorrichtung (2) dazu konfiguriert ist, einen Datenstrom an den Gesprächspartner (20) des Sprachanrufs außerhalb des Fahrzeugs (1) zu beenden oder zu verringern, wenn der vordefinierte Mute-Modus des Sprachanrufs aktiviert ist.

3. Fahrzeug (1) nach einem der vorhergehenden Ansprüche, **dadurch gekennzeichnet, dass** die Steuervorrichtung (7) dazu konfiguriert ist, bei Empfang eines vordefinierten Unmute-Signals (18) die Kommunikationsvorrichtung (2) dazu zu steuern, den Mute-Modus des Sprachanrufs in der Kommunikationsvorrichtung (2) zu deaktivieren.

4. Fahrzeug (1) nach Anspruch 3, **dadurch gekennzeichnet, dass** das Fahrzeug (1) eine Eingabevorrichtung (12) umfasst, die dazu konfiguriert ist,
eine vordefinierte erste Benutzereingabe (13) zu erkennen und das vordefinierte Mute-Signal (18) bei Erkennung der vordefinierten ersten Benutzereingabe (13) an die Steuervorrichtung (7) zu senden, und/oder
eine vordefinierte zweite Benutzereingabe (14) zu erkennen und das vordefinierte Unmute-Signal (19) (18) bei Erkennung der vordefinierten zweiten Benutzereingabe (14) an die Steuervorrichtung (7) zu senden.

5. Fahrzeug (1) nach Anspruch 4, **dadurch gekennzeichnet, dass** die Eingabevorrichtung (12) ein Eingabeelement (15) eines Lenkrads (16) umfasst, das sich auf einem Lenkrad (16) des Fahrzeugs (1) befindet und dazu konfiguriert ist, die vordefinierte erste Benutzereingabe (13) und/oder die vordefinierte zweite Benutzereingabe (14) zu erkennen.

6. Fahrzeug (1) nach Anspruch 4 oder 5, **dadurch gekennzeichnet, dass** die Eingabevorrichtung (12) ein Eingabeelement (17) einer Fahrzeug-(1)-Konsole umfasst, das sich auf einer Fahrzeug-(1)-Konsole des Fahrzeugs (1) befindet und dazu konfiguriert ist, die vordefinierte erste Benutzereingabe (13) und/oder die vordefinierte zweite Benutzereingabe (14) zu erkennen.

7. Fahrzeug (1) nach einem der Ansprüche 4 bis 6, **dadurch gekennzeichnet, dass** die Eingabevorrichtung (12) ein Berührungsbildschirm-Eingabeelement umfasst, das dazu konfiguriert ist, die vordefinierte erste Benutzereingabe (13) und/oder die vordefinierte zweite Benutzereingabe (14) zu erkennen.

8. Fahrzeug (1) nach einem der vorhergehenden Ansprüche, **dadurch gekennzeichnet, dass** die Steuervorrichtung (7) dazu konfiguriert ist, die Kommunikationsvorrichtung (2) mittels Bluetooth zu steuern.

9. Fahrzeug (1) nach einem der vorhergehenden Ansprüche, **dadurch gekennzeichnet, dass** die Kommunikationsvorrichtung (2) als eine interne Kommunikationsvorrichtung (2) entworfen ist, die in dem Fahrzeug (1) installiert ist.

10. Fahrzeug (1) nach einem der vorhergehenden Ansprüche, **dadurch gekennzeichnet, dass** die Kommunikationsvorrichtung (2) als eine externe Kommunikationsvorrichtung (2) entworfen ist, die abnehmbar in einer vordefinierten Halterung des Fahrzeugs (1) eingerichtet ist oder sich lose in dem Fahrgastraum des Fahrzeugs (1) befindet.

11. Verfahren zum Betreiben eines Fahrzeugs (1) zum Durchführen eines vordefinierten Sprachanrufs mittels einer Kommunikationsvorrichtung (2), wobei
- eine Aufzeichnungsvorrichtung des Fahrzeugs (1) Ton und/oder Bilder in einem Fahrgastraum des Fahrzeugs (1) aufzeichnet und jeweilige Aufzeichnungssignale während des vordefinierten Sprachanrufs erzeugt,
- eine Steuervorrichtung (7) des Fahrzeugs (1) die Aufzeichnungssignale während des vordefinierten Sprachanrufs an die Kommunikationsvorrichtung (2) überträgt,
- die Steuervorrichtung (7) ein vordefiniertes Mute-Signal (18) empfängt,
**dadurch gekennzeichnet, dass**
- die Steuervorrichtung (7) bei Empfang des vordefinierten Mute-Signals (18) die Kommunikationsvorrichtung (2) dazu steuert, einen vordefinierten Mute-Modus des Sprachanrufs in der Kommunikationsvorrichtung (2) zu aktivieren, wobei die Kommunikationsvorrichtung (2) die Aufzeichnungssignale während des vordefinierten Sprachanrufs empfängt und die Aufzeichnungssignale verwirft, wenn der vordefinierte Mute-Modus des Sprachanrufs in der Kommunikationsvorrichtung (2) aktiviert ist, und die Aufzeichnungssignale an einen Gesprächspartner (20) des vordefinierten Sprachanrufs außerhalb des Fahrzeugs überträgt, wenn der vordefinierte Mute-Modus des Sprachanrufs nicht aktiviert ist,
wobei die Kommunikationsvorrichtung (2) dazu konfiguriert ist, ein Mute-Statussignal (21), das einen Status des Mute-Modus angibt, an den Gesprächspartner (20) des Sprachanrufs außerhalb des Fahrzeugs (1) zu senden.

## Revendications

1. Véhicule (1) configuré pour effectuer un appel vocal via un dispositif de communication (2), dans lequel
- le véhicule (1) comprend un dispositif d'enregistrement, configuré pour enregistrer des sons et/ou des images dans l'habitacle du véhicule (1) et pour générer des signaux d'enregistrement correspondants (6) pendant l'appel vocal,
- le véhicule (1) comprend un dispositif de contrôle (7) configuré pour transmettre les signaux d'enregistrement (6) vers le dispositif de communication (2) pendant l'appel vocal,
- le dispositif de commande (7) est configuré, à la réception d'un signal de mise en sourdine prédéfini (18), pour commander le dispositif de communication (2) afin d'activer un mode de mise en sourdine prédéfini de l'appel vocal dans le dispositif de communication,
**caractérisé en ce que**
le dispositif de communication (2) est configuré pour recevoir les signaux d'enregistrement pendant l'appel vocal prédéfini et pour éliminer les signaux d'enregistrement (6) lorsque le mode de mise en sourdine prédéfini de l'appel vocal est activé dans le dispositif de communication (2), et pour transmettre les signaux d'enregistrement à un correspondant (20) de l'appel vocal situé à l'extérieur du véhicule (1) lorsque le mode de mise en sourdine prédéfini de l'appel vocal n'est pas activé,
le dispositif de communication (2) étant configuré pour envoyer un signal d'état de mise en sourdine (21), indiquant un état du mode de mise en sourdine, au correspondant (20) de l'appel vocal à l'extérieur du véhicule (1).

2. Véhicule (1) selon la revendication 1, **caractérisé en ce que** le dispositif de communication (2) est configuré pour interrompre fin ou réduire un flux de données vers le correspondant (20) de l'appel vocal à l'extérieur du véhicule (1) lorsque le mode de mise en sourdine prédéfini de l'appel vocal est activé.

3. Véhicule (1) selon l'une des revendications précédentes, **caractérisé en ce que** le dispositif de commande (7) est configuré, à la réception d'un signal de désactivation de la mise en sourdine prédéfini (18), pour commander le dispositif de communication (2) afin de désactiver le mode de mise en sourdine de l'appel vocal dans le dispositif de communication (2).

4. Véhicule (1) selon la revendication 3, **caractérisé en ce que** le véhicule (1) comprend un dispositif d'entrée (12) configuré pour
détecter une première entrée utilisateur prédéfinie (13) et envoyer le signal de mise en sourdine prédéfini (18) au dispositif de commande (7) lors de la détection de la première entrée utilisateur prédéfinie (13) et/ou
détecter une deuxième entrée utilisateur prédéfinie (14) et envoyer le signal de désactivation de la mise en sourdine (19) (18) au dispositif de commande (7) lors de la détection de la deuxième entrée utilisateur prédéfinie (14).

5. Véhicule (1) selon la revendication 4, **caractérisé en ce que** le dispositif d'entrée (12) comprend un élément d'entrée (15) de volant (16), situé sur un volant (16) du véhicule (1) configuré pour détecter la première entrée utilisateur prédéfinie (13) et/ou la deuxième entrée utilisateur prédéfinie (14).

6. Véhicule (1) selon la revendication 4 ou 5, **caractérisé en ce que** le dispositif d'entrée (12) comprend un élément d'entrée de console de véhicule (17), situé sur une console de véhicule (1) du véhicule (1) configurée pour détecter la première entrée utilisateur prédéfinie (13) et/ou la deuxième entrée utilisateur prédéfinie (14).

7. Véhicule (1) selon l'une des revendications 4 à 6, **caractérisé en ce que** le dispositif d'entrée (12) comprend un élément d'entrée à écran tactile, configuré pour détecter la première entrée utilisateur prédéfinie (13) et/ou la deuxième entrée utilisateur prédéfinie (14).

8. Véhicule (1) selon l'une des revendications précédentes, **caractérisé en ce que** le dispositif de commande (7) est configuré pour commander le dispositif de communication (2) via Bluetooth.

9. Véhicule (1) selon l'une des revendications précédentes, **caractérisé en ce que** le dispositif de communication (2) est conçu comme un dispositif de communication interne (2), installé dans le véhicule (1).

10. - Véhicule (1) selon l'une des revendications précédentes, **caractérisé en ce que** le dispositif de communication (2) est conçu comme un dispositif de communication externe (2), amovible, disposé dans un support prédéfini du véhicule (1) ou situé de manière libre dans l'habitacle du véhicule (1).

11. Procédé de fonctionnement d'un véhicule (1) pour effectuer un appel vocal prédéfini via un dispositif de communication (2), dans lequel
- un dispositif d'enregistrement du véhicule (1) enregistre des sons et/ou des images dans l'habitacle du véhicule (1) et génère des signaux d'enregistrement correspondants pendant l'appel vocal prédéfini,
- un dispositif de commande (7) du véhicule (1) transmet les signaux d'enregistrement au dispositif de communication (2) pendant l'appel vocal prédéfini,
- le dispositif de commande (7) reçoit un signal de mise en sourdine prédéfini (18) **caractérisé en ce que**
- à la réception du signal de mise en sourdine prédéfini (18), le dispositif de commande (7) commande le dispositif de communication (2), afin d'activer un mode de mise en sourdine prédéfini de l'appel vocal dans le dispositif de communication (2),
le dispositif de communication (2) recevant les signaux d'enregistrement pendant l'appel vocal prédéfini et éliminant les signaux d'enregistrement, lorsque le mode de mise en sourdine prédéfini de l'appel vocal est activé dans le dispositif de communication (2), et transmettant les signaux d'enregistrement à un correspondant (20) de l'appel vocal prédéfini à l'extérieur du véhicule lorsque le mode de mise en sourdine prédéfini de l'appel vocal n'est pas activé,
le dispositif de communication (2) étant configuré pour envoyer un signal d'état de mise en sourdine (21), indiquant un statut du mode de mise en sourdine au correspondant (20) de l'appel vocal à l'extérieur du véhicule (1).
